# FASCICULE DE BREVET EUROPEEN

(11) **EP 0 895 714 B1**
(45) Date de publication et mention de la délivrance du brevet: **31.05.2000**
(21) Numéro de dépôt: 98401990.1
(22) Date de dépôt: 05.08.1998
(51) Int. Cl.: A01K 1/06

(54) **Cornadis de sécurité**
Sicherheitsfressgitter
Safety feed stanchion

(30) Priorité: 08.08.1997 FR 9710193
(43) Date de publication de la demande: 10.02.1999
(73) Titulaire: Etablissements Jourdain Société Anonyme, 45300 Pithiviers (FR)
(72) Inventeur: Jourdain, Martial Maurice Marcel, 45300 Escrennes (FR)
(74) Mandataire: Vander-Heym, Serge

(56) Documents cités:
- EP-A- 0 562 678
- DE-A- 2 936 923
- GB-A- 2 305 102

## Description

La présente invention est relative à un cornadis de sécurité.

Dans sa forme la plus simple un cornadis est constitué par une barrière formant une succcesion d'ouvertures, délimitées chacune par un montant vertical, par le longeron supérieur de la barrière et par un bras pivotant.

D'une façon générale, chaque ouverture a une section sensiblement en forme de triangle dont un sommet est situé vers le bas. Lorsque l'animal introduit la tête dans l'ouverture, le bras pivote pour venir occuper une position sensiblement verticale, position dans laquelle il est verrouillé automatiquement. Un cornadis de ce type est décrit dans le brevet français publié sous le numéro 2535162.

Si l'animal s'effondre, lorsqu'il est entravé (bras en position verticale) il est très difficile de le dégager car il faut le soulever pour permettre le pivotement du bras.

Dans de nouveaux matériels, dits cornadis de sécurité, il est prévu des moyens pour permettre au bras de pivoter plus amplement de façon à dégager une ouverture sensiblement triangulaire évasée à sa partie inférieure.

De cette façon, si un animal s'effondre, il est relativement aisé de le dégager.

Cette position du bras, dite "ouverture en bas" est également utilisée lorsqu'on désire laisser un libre accès à l'auge.

Il en résulte que certains bras sont en position "ouverture en haut" et, d'autres, en position "ouverture en bas" ce qui oblige l'éléveur, à replacer manuellement tous les bras dans la position "ouverture en haut" lorsqu'il désire que l'installation fonctionne en "entrave automatique".

On a déjà proposé des dispositifs présentant un ressort métallique de rappel, mais l'expérience a montré qu'outre le fait qu'un tel ressort ne pouvait pas s'adapter facilement au matériel existant, il se corrodait très rapidement dans ce milieu agressif avec tous les inconvénients que celà peut présenter. Voir e.g. le document GB-A-2 305 102.

La présente invention, qui remédie à ces inconvénients, est remarquable en ce qu'on interpose une masse en caoutchouc, ou en une matière analogue non métallique, entre le bras pivotant et son support en un point situé en-dessous de son axe d'articulation.

La présente invention sera mieux comprise par la description qui va suivre faite en se référant aux dessins annexés à titre d'exemple indicatif, seulement, sur lesquels :
- la figure 1 montre, en élévation, un ensemble de cornadis de sécurité d'un type connu;
- la figure 2 est une vue à plus grande échelle du détail A de la figure 1 montrant l'utilisation du dispositif de l'invention;
- la figure 3 est la vue de gauche de la figure 2, limitée au dispositif de l'invention;

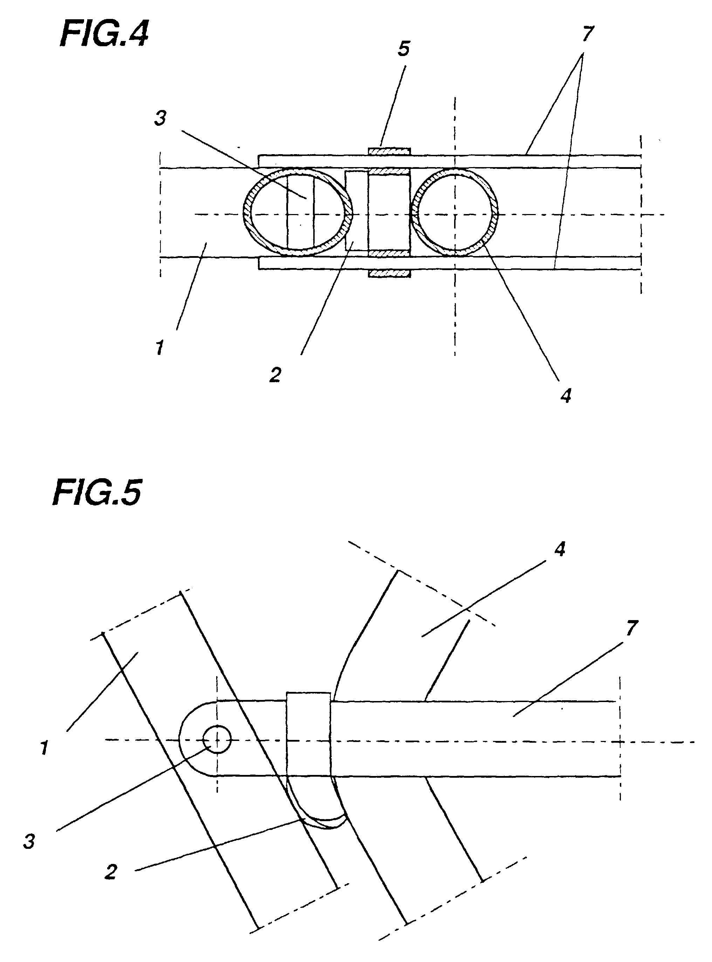

- la figure 4 est une vue en coupe effectuée selon la ligne IV-IV de la figure 2;
- la figure 5 est une vue, analogue à la figure 2, montrant le bras pivotant en position de sécurité.

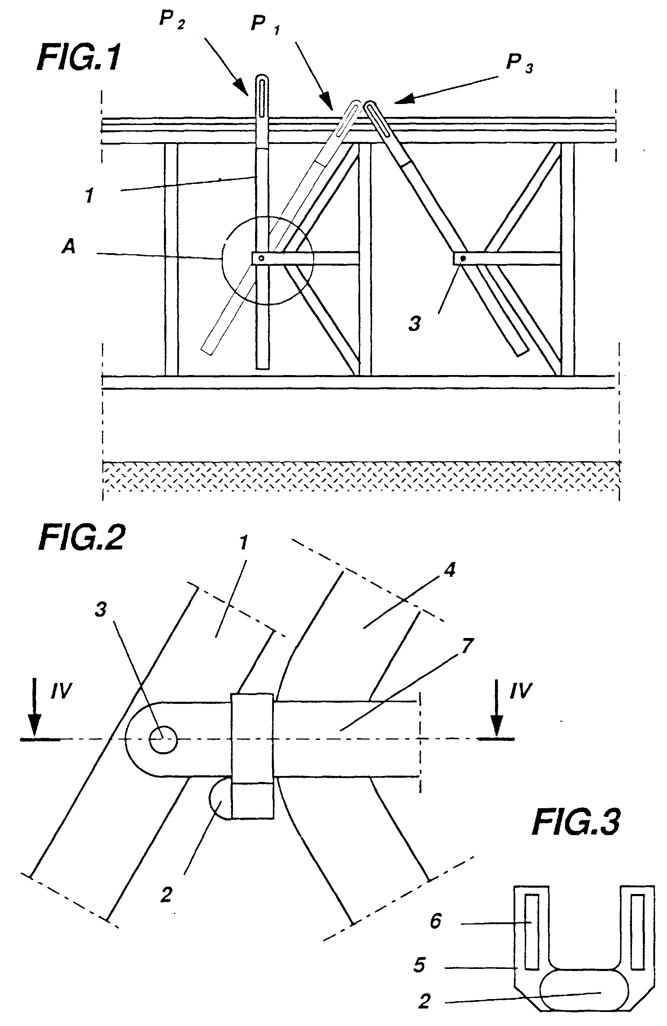

En se reportant à la figure 1 et selon un mode de réalisation on voit que, dans les cornadis de sécurité connus, le bras pivotant 1 peut occuper trois positions. Des dispositifs, connus et non représentés en détail, sont utilisés pour verrouiller, ou non, le bras selon chacune de ces positions.

En P₁, le bras est dans la position "ouverture en haut", en P₂ il est dans la position "animal entravé" et en P₃ il est dans la position "ouverture en bas". Compte tenu des moyens utilisés pour verrouiller les bras, ceux-ci présentent une surcharge de poids à leur partie supérieure, les positions P₁ et P₃ sont très stables et un effort, non négligeable, est nécessaire pour faire basculer, manuellement, le bras de la position P₃ à celle P₁ .

Lorsqu'on désire que tous les animaux s'entravent automatiquement il est nécessaire de ramener, manuellement, tous les bras en position P₃ dans la position P₁ avec tous les inconvénients que celà présente.

Selon l'invention, on interpose entre le bras 1 et son support une masse 2, en caoutchouc, en un point situé en-dessous de l'axe d'articulation 3 du bras et à proximité de ce dernier, ladite masse ayant un volume tel qu'elle s'oppose à ce que le bras puisse venir occuper, naturellement, la position" ouverture en bas".

Si, par exemple, les cornadis sont "en libre accès" et qu'un animal veut se dégager par le bas, il va faire pivoter, par la force de son cou, le bras 1 pour l'amener en position P₃. Ce faisant la masse 2 va être fortement comprimée entre la partie inférieure du bras et son support. Dans l'exemple représenté, il s'agit du tube coudé 4. Une fois l'animal dégagé, l'energie accumulé dans la masse 2 se libère et fait pivoter le bras pour l'amener dans la position P₁.

La masse 2 comporte des moyens pour permettre sa fixation sans l'aide d'outil. Ainsi elle comporte, au moins, une extension 5 présentant une ouverture 6 permettant de l'engager sur le support du bras. La masse 2 et les extensions 5 sont obtenues en une seule pièce moulée dans la même matière.

Dans l'exemple représenté, le bras 1 est articulé entre les ailes d'une chape formé par deux fers plats 7 enserrant le tube coudé 4. Dans ce cas, la masse 2 présente deux extensions 5 (voir figure 3) pouvant être engagées, chacune, sur le fer 7 correspondant.

Dans d'autres modes de réalisation de cornadis, le bras pivotant présente solidairement deux plats soudés formant une chape permettant son articulation sur le support. Dans ce cas, la masse 2 est montée sur le bras.

Il est à noter que le dispositif de l'invention est situé en un endroit peu accessible par les animaux qui ne risquent pas de le mordiller. Il est à noter, de plus, que le dispositif est réalisé en une matière inerte dont l'ingestion accidentelle par un animal serait sans suite pour ce dernier.

Selon un autre mode de réalisation de l'invention, la masse 2 est portée par une bague qui est engagée, à force, sur la partie inférieure du bras 1. Cette bague peut affecter la forme d'un tore.

Un autre avantage du dispositif de l'invention réside dans sa facilité de pose, son interchangeabilité et son adaptation automatique aux cornadis existants.

## Revendications

1. Cornadis de sécurité, caractérisé en ce qu'une masse (2), en caoutchouc ou en une matière analogue non métallique, est interposée entre le bras pivotant (1) et son support en un point situé, en-dessous et à proximité, de l'axe d'articulation (3) dudit bras, le volume de ladite masse étant tel que celle-ci est fortement comprimée lorsque le bras pivote pour se placer en position (P₃), "ouverture en bas".

2. Cornadis selon la revendication 1, caractérisé en ce que la masse (2) présente, au moins, une extension 5 comportant une ouverture (6) permettant de monter ladite masse sur la chape d'articulation du bras.

3. Cornadis selon la revendication 1 caractérisé en ce que la masse (2) est portée par une bague, éventuellement torique, engagée, à force sur la partie inférieure du bras (1).

## Patentansprüche

1. Sicherheitsabtrenngatter, dadurch gekennzeichnet, daß ein Gewicht (2) aus Kautschuk oder einem analogen, nicht metallhaltigen Material zwischen einem Schwenkarm (1) und seiner Stütze an einem unterhalb und in der Nähe der Artikulationsachse (3) besagten Arms eingefügt ist, wobei das Volumen des besagten Gewichts derart ist, daß diese stark komprimiert wird, wenn der Arm schwenkt, um in die Position (P3) "Öffnung des Arms" umzuschwenken.

2. Sicherheitsabtrenngatter gemäß Anspruch 1, dadurch gekennzeichnet, daß das Gewicht (2) wenigsten eine Ausdehnung 5 aufweist, die eine Öffnung (6) umfaßt, die es erlaubt, besagtes Gewicht auf der Artikulationsabdeckung des Arms anzubringen.

3. Sicherheitsabtrenngatter gemäß Anspruch 1, dadurch gekennzeichnet, daß das Gewicht (2) durch einen eventuell torischen Ring getragen wird, der unter Krafteinwirkung in den unteren Teil des Arms (1) eingreift.

## Claims

1. Safety cornadis, characterised in that a rubber weight (2) or one made of a similar non-metallic material is inserted between the pivoting arm (1) and its support at a point situated below and close to the hinge pin (3) of said arm, the volume of said weight being such that the latter is strongly compressed when the arm pivots so as to be placed in the "bottom opening" position (P3).

2. Cornadis according to claim 1, characterised in that the weight (2) has at least one extension 5 comprising an opening (6) enabling said weight to be mounted on the hinge cover of the arm.

3. Cornadis according to claim 1, characterised in that the weight (2) is borne by a ring, possibly toric, forcefully engaged on the lower portion of the arm (1).
